# EUROPÄISCHE PATENTANMELDUNG

(11) **EP 1 300 367 A2**
(43) Veröffentlichungstag der Anmeldung: **09.04.2003**
(21) Anmeldenummer: 02022120.6
(22) Anmeldetag: 02.10.2002
(51) Int. Cl.: C02F 3/12

(54) **Kleinkläranlage zur Behandlung von Abwasser**

(30) Priorität: 05.10.2001 DE 20116397 U
(71) Anmelder: Baumann, Markus, 32602 Vlotho (DE)
(72) Erfinder: Baumann, Markus, 32602 Vlotho (DE)
(74) Vertreter: TER MEER STEINMEISTER & PARTNER GbR

(57) **Zusammenfassung**

Die Vorrichtung dient zur Behandlung von Abwasser in einer Mehrkammer-Kleinkläranlage mit wenigstens je einer Vorklärkammer (18,20) und einer Klärkammer (16), die durch eine Trennwand (12) getrennt sind. Sie ist versehen mit einem Belüfter (32) innerhalb der Klärkammer (16) sowie Pumpeinrichtungen zur Überführung von Schmutzwasser von der Vorklärkammer (18,20) in die Klärkammer (16) sowie zur Rückführung von Überschußschlamm von der Klärkammer (16) in die Vorklärkammer (18,20). In der Vorklärkammer (18,20) ist eine Pumpe (36) zur Überführung von Schmutzwasser in die Klärkammer (16) durch eine über die Trennwand (12) hinweg in die Klärkammer (16) verlaufende Leitung vorgesehen. Am unteren Ende der Leitung ist in der Klärkammer eine nach unten offene Auffangschale (40) vorgesehen und der Belüfter ist (32) derart angeordnet, daß er unterhalb der Auffangschale (40) ein Wasser-Luft-Gemisch erzeugt.

## Beschreibung

Die Erfindung betrifft eine Vorrichtung zur Behandlung von Abwasser in einer Mehrkammer-Kleinkläranlage mit wenigstens je einer Vorklärkammer und einer Klärkammer, die durch eine Trennwand getrennt sind, mit einem Belüfter innerhalb der Klärkammer sowie Pumpeinrichtungen zur Überführung von Schmutzwasser von der Vorklärkammer in die Klärkammer sowie zur Rückführung von Überschußschlamm von der Klärkammer in die Vorklärkammer.

Es ist bekannt, Mehrkammer-Kläranlagen, insbesondere solche mit Dreikammer-Behältern, mit verhältnismäßig wenigen Aggregaten für einen wirksamen Klärbetrieb auszurüsten. Ein Beispiel einer derartigen Anlage wird in der DE 200 20 795 U1 beschrieben. Im Interesse einer effizienten Steuerung des Klärvorganges ist eine relativ genaue Kontrolle des Transports der durch die Kläranlage hindurchgeführten Wassermengen notwendig. Zu diesem Zweck wird zum einen eine Klarwasser-Entnahmepumpe und im übrigen ein Belüfter innerhalb der Klärkammer benötigt. Ferner ist es notwendig, zum einen Schmutzwasser aus der Vorklärkammer in die Klärkammer zu überführen und zum anderen überschüssigen Schlamm aus der Klärkammer oder Behandlungsgrube zurück in die Vorklärkammer zu transportieren. Dies würde maximal zwei weitere Förderpumpen erfordern.

In dem eingangs genannten Gebrauchsmuster wird jedoch eine Lösung beschrieben, bei der mit Hilfe nur einer Pumpe zum einen Klärschlamm aus der Klärkammer zurück in die Vorklärkammer transportiert und zum anderen Schmutzwasser aus der Vorklärkammer in die Klärkammer gebracht werden kann. Dies geschieht mit Hilfe einer in der Klärkammer angeordneten Pumpe, die eine über die Trennwand zwischen den Kammern hinweggeführte Ausgangsleitung aufweist, über die überschüssiger Schlamm aus der Klärkammer zurück in die Vorklärkammer transportiert wird. Wird die Pumpe anschließend abgeschaltet, so wird aufgrund des niedrigeren Wasserspiegels in der Klärkammer nach dem Prinzip der kommunizierenden Röhren Schmutzwasser von der Vorklärkammer in die Klärkammer gezogen.

An der Unterseite der Pumpe befindet sich eine nach unten offene Schale, durch die Luftblasen eingefangen werden, die von der unterhalb der Pumpe angeordneten Belüftung innerhalb der Klärkammer aufsteigen. Diese Luftblasen sammeln sich in der Schale und gelangen in die Ausgangsleitung, die über die Trennwand hinweg verläuft, bis sich hier so viel Luft angesammelt hat, daß die Saugwirkung unterbrochen wird. Auf diese Weise läßt sich die Überführung von Schmutzwasser aus der Vorklärkammer in die Klärkammer beenden. Eine Einschaltung der Belüftung zu einem im einzelnen zu ermittelnden und in der Pumpensteuerung festzulegenden Zeitpunkt und über einen ebenfalls zu ermittelnden Zeitraum kann also zur Steuerung des Schmutzwassertransports genutzt werden, ohne daß ein aufwendiges Ventilsystem oder sogar eine zweite Pumpe notwendig ist. Mit nur einer Pumpe können in einfacher Weise die beiden Ströme von der Klärkammer in die Vorklärkammer und von der Vorklärkammer in die Klärkammer gesteuert werden.

Diese bekannte Lösung stellt zwar eine erhebliche Vereinfachung gegenüber dem früheren Stand der Technik dar, hat jedoch nach wie vor einige Nachteile.

Zum einen ist es notwendig, die gesamte Kläranlage bei Inbetriebnahme mit sauberem Frischwasser aufzufüllen, um eine Füllung der Verbindungsleitung zu gewährleisten und andererseits ein Leerlaufen der Klärkammer unterhalb des Pumpniveaus zu verhindern. Zum anderen werden die vorhandenen Volumina der einzelnen Kammern nur ungenügend ausgenutzt. Die Klärkammer kann nie vollständig gefüllt werden, da für den Transport des Wassers aus der Vorklärkammer ein deutlicher Höhenunterschied notwendig ist. Das Befüllen der Klärkammer erfolgt nur sehr langsam, da hier nur die Schwerkraftwirkung der Wassersäule zur Verfügung steht. Bei sehr unregelmäßigem Zufluß kann daher sogar eine zusätzliche Pumpe notwendig sein, die gewährleistet, daß stets eine gewisse Abwassermenge in die Klärkammer gelangt.

Der Erfindung liegt daher die Aufgabe zugrunde, eine Klärvorrichtung der obigen Art zu schaffen, die eine wirksamere und raschere Durchführung des Klärvorganges gestattet, ohne daß zusätzliche technische Aggregate erforderlich sind.

Diese Aufgabe wird erfindungsgemäß bei einer Vorrichtung der obigen Art dadurch gelöst, daß in der Vorklärkammer eine Pumpe zur Überführung von Schmutzwasser in die Klärkammer durch eine über die Trennwand hinweg in die Klärkammer verlaufende Leitung vorgesehen ist, daß am unteren Ende der Leitung in der Klärkammer eine nach unten offene Auffangschale vorgesehen ist und daß der Belüfter derart angeordnet ist, daß er unterhalb der Auffangschale ein Wasser-Luft-Gemisch erzeugt.

In diesem Falle erfolgt die Zwangsförderung des Schmutzwassers aus der Vorklärkammer in die Klärkammer mit größerer Geschwindigkeit, als bei dem zuvor beschriebenen System, das auf die Schwerkraftwirkung angewiesen ist. Dies ist wesentlich, da in dieser Richtung eine größere Fördergeschwindigkeit notwendig ist als bei der Rückführung der begrenzten Menge des Überschußschlammes. Dies geschieht nach der vorliegenden Erfindung nach dem System der kommunizierenden Röhren, nachdem bei gefüllter Leitung am Ende eines Pumpvorganges aus der über den Wasserspiegel der Vorklärkammer hinaus gefüllten Klärkammer in Richtung der Vorklärkammer eine Sogwirkung ausgeübt wird. Grundsätzlich ist es möglich, die Klärkammer bis zu einem nahezu beliebigen Niveau zu füllen. Es ist z. B. möglich, die Kläranlage bis zum Erreichen eines maximalen Niveaus in der Klärkammer in einem Sparbetrieb laufen zu lassen und danach erst den eigentlichen Reinigungsbetrieb zu starten. Durch Verwendung der Pumpe auf der Seite der Vorklärkammer ist ein gezieltes und rasches Füllen der Klärkammer stets gewährleistet. Die Vorklärkammer kann bei unregelmäßigem Zufluß als Pufferbecken benutzt werden, aus dem die Klärkammer mit Hilfe der Pumpe in Verbindung mit einer geeigneten Steuerung gezielt befüllt werden kann. Da die aus der Vorklärkammer ausgepumpte Wassermenge größer sein kann, als es bei einem einfachen Niveauausgleich möglich wäre, ergibt sich als weiterer Vorteil eine beträchtliche Vergrößerung des Puffervolumens in der Vorklärkammer.

Neben diesen Vorteilen bietet die erfindungsgemäß vorgesehene Pumpe den weiteren Vorteil, daß sie zugleich zur gesteuerten Rückführung des Überschußschlamms aus der Klärkammer in die Vorklärkammer verwendet werden kann. Da die Ausgangsleitung der Pumpe in die Klärkammer eintaucht, kann das Wasser bzw. der Überschußschlamm aus der Klärkammer nach dem Abschalten des Pumpvorganges nach dem Prinzip der kommunizierenden Röhren in die Vorklärkammer zurücklaufen.

Erfindungsgemäß ist an der Austrittsöffnung der Leitung innerhalb der Klärkammer eine nach unten offene Schale vorgesehen, die die Eintrittsöffnung der Leitung umgibt, aber freiläßt. Da der Tauchbelüfter Luft in den Bereich unterhalb der Schale drückt, sammeln sich die vom Tauchbelüfter abgegebenen Luftblasen in der Schale und damit auch in der Leitung. Sobald sich hier ein ausreichend großes Luftpolster gebildet hat, wird die Saugwirkung in Richtung Vorklärkammer unterbrochen.

Die zugehörige Steuerung kann so ausgelegt werden, daß zu Beginn eines Klär-Zyklus Schmutzwasser aus der Vorklärkammer in die Klärkammer überführt wird. Wird die Pumpe jetzt abgeschaltet, so fließt ein Wasser-Schlamm-Gemisch aus der Klärkammer zurück in die Vorklärkammer. Dieser Rückstrom kann in der beschriebenen Weise unterbrochen werden, wenn der Belüfter über ein vorprogrammiertes Zeitintervall eingeschaltet oder auch für den weiteren Klärvorgang in Betrieb gesetzt wird. Sobald sich ein ausreichendes Luftpolster in der Ausgangsleitung der Pumpe gesammelt hat, ist der Rückstrom beendet. Der Klärvorgang kann fortgesetzt werden.

Im folgenden werden bevorzugte Ausführungsbeispiele der Erfindung anhand der beigefügten Zeichnung näher erläutert.
- Fig. 1: zeigt einen Querschnitt durch eine übliche Dreikammer-Klärkammer;
- Fig. 2: ist ein senkrechter Schnitt durch die in Fig. 1 gezeigte Klärkammer;

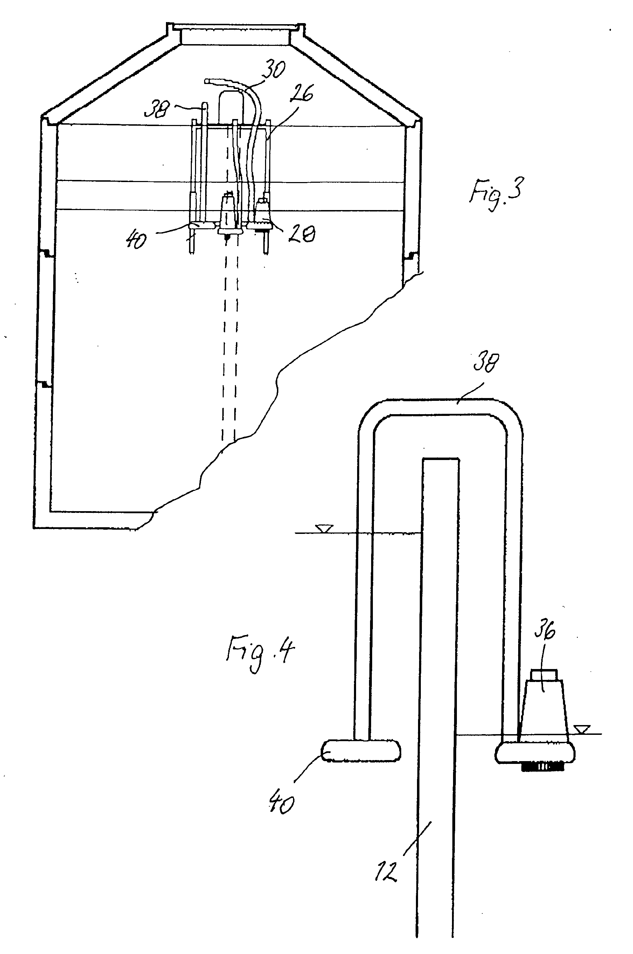

- Fig. 3: ist ein weiterer senkrechter Schnitt in einem zu Fig. 2 um 90° versetzten Winkel;
- Fig. 4: eine vergrößerte Teildarstellung einer erfindungsgemäß eingesetzten Pumpe.

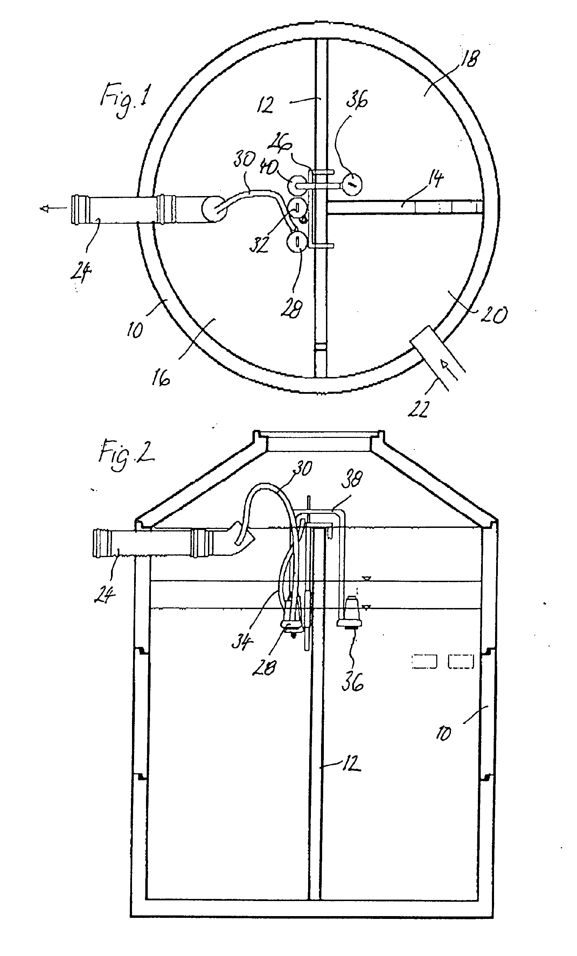

Fig. 1 zeigt einen Querschnitt durch eine sogenannte Dreikammergrube, die einen zylindrischen Behälter 10 aufweist, der durch eine erste Trennwand 12 in zwei gleiche Hälften unterteilt wird, von denen eine durch eine weitere Trennwand 14 noch einmal halbiert wird. Auf diese Weise entstehen eine Klärkammer 16 mit einem Umfangswinkel von 180° sowie zwei Vorklärkammern 18,20 mit Umfangswinkeln von jeweils 90°, die miteinander verbunden sind und die Funktion eines Schlammspeichers, Puffers und Absetzbeckens haben. Abwasser wird durch einen Zulauf 22 in eines der Vorklärbecken 20 geleitet. Geklärtes Wasser tritt durch einen Ablauf 24 aus der Klärkammer 16 aus.

Derartige Dreikammergruben wurden bereits bisher als Klärbecken benutzt, sind also bereits vorhanden und sollen durch die erfindungsgemäß vorgesehenen Aggregate nachgerüstet werden.

Damit dies in möglichst einfacher Weise möglich ist, kann beispielsweise ein Rahmen oder eine Halterung 26 verwendet werden, an der die verschiedenen Aggregate befestigt sind, so daß der gesamte Nachrüstsatz auf eine der Trennwände, im dargestellten Beispiel die lange Trennwand 12 aufgehängt werden kann. Natürlich ist es auch möglich, die Aggregate einzeln auf die Trennwände zu hängen oder auf Schwimmkörpern zu montieren. Der Vollständigkeit halber sei erläutert, daß bei dem dargestellten Beispiel auf der Halterung zum einen eine Klarwasser-Entnahmepumpe 28 angebracht ist, die über einen Schlauch 30 mit dem Ablauf 24 verbunden ist und geklärtes Wasser nach außen abgibt. Neben der Klarwasser-Entnahmepumpe 28 befindet sich ein Belüfter 32, der über einen von außen zugeführten, nur teilweise dargestellten Schlauch Außenluft aufnimmt und in einem starken Pumpenstrahl abwärts in das Wasser der Klärkammer drückt. Dadurch entstehen Luftblasen im Wasser, die nach oben aufsteigen und bewirken, daß Sauerstoff in das Wasser eingetragen wird.

In der Vorklärkammer 18 befindet sich eine weitere Pumpe 36, die an ihrem Ausgang mit einer Leitung 38 verbunden ist, die bogenförmig über die Trennwand 12 hinweg in die Klärkammer 16 geführt ist. Diese Pumpe 36 mit der Leitung 38 sind vergrößert in Fig. 4 dargestellt. Die Pumpe 36 dient dazu, das Abwasser, das sich in den Vorklärkammern 18,20 gesammelt hat, über die Trennwand 12 hinweg in die Klärkammer 16 zu überführen.

Dies kann durchaus in einem Maße geschehen, daß der Wasserspiegel in der Klärkammer 16 erheblich höher liegt als der Wasserspiegel in der Vorklärkammer 18, wie etwa auch in Fig. 4 andeutungsweise gezeigt ist. Das ermöglicht eine gute Nutzung des Volumens der Klärkammer 16. Wenn die Pumpe 36 bei Verhältnissen abgeschaltet wird, wie sie in Fig. 4 angedeutet sind, und die Leitung 38 noch mit Wasser gefüllt ist, wird das Wasser aufgrund des Prinzips der kommunizierenden Röhren aus der Klärkammer 16 zurück in die Vorklärkammer 18 fließen, und zwar umso rascher, je größer die Höhendifferenz zwischen den beiden Wasserspiegeln ist.

Auf der Seite der Klärkammer 16 befindet sich am unteren Ende der Leitung 38 eine nach unten offene Auffangschale 40. Durch den Belüfter 32 wird unterhalb des Belüfters und damit auch unterhalb der Auffangschale 40 im Wasser ein großer Bereich gebildet, in dem Luftblasen aufsteigen.

Zumindest ein Teil dieser Luftblasen gelangt von unten in die Auffangschale und bildet hier nach und nach ein Luftpolster, das durch die Leitung 38 aufsteigt und im höchsten Bereich der Leitung 38 angesammelt wird. Wenn dieses Luftpolster im oberen Bereich der Leitung 38 ein gewisses Volumen erreicht hat, wird die Saugwirkung in Richtung der Vorklärkammer 18 unterbrochen. Es ist daher beispielsweise möglich, mit Hilfe eines zu vorgegebener Zeit über eine vorgegebene Länge abgegebenen Belüftungsstoßes in vorgegebenem Abstand zum Ende des Betriebes der Pumpe 36 die Menge des zurücklaufenden Wasser-Schlamm-Gemisches zu bestimmen. Nähere Einzelheiten können der Erprobung durch den kundigen Fachmann überlassen bleiben.

In einer modifizierten Ausführungsform können die Klärkammer 16 und die vorklärkammer 18 auch durch getrennte Behälter gebildet werden. Die "Trennwand" zwischen ihnen wird dann durch Teile der Wände der einzelnen Behälter gebildet.

## Patentansprüche

1. Vorrichtung zur Behandlung von Abwasser in einer Mehrkammer-Kleinkläranlage mit wenigstens je einer Vorklärkammer (18,20) und einer Klärkammer (16), die durch eine Trennwand (12) getrennt sind mit einem Belüfter (32) innerhalb der Klärkammer (16) sowie Pumpeinrichtungen (36,38,40) zur Überführung von Schmutzwasser von der Vorklärkammer (18,20) in die Klärkammer (16) sowie zur Rückführung von Überschußschlamm von der Klärkammer (16) in die Vorklärkammer (18,20), **dadurch gekennzeichnet, daß** in der Vorklärkammer (18,20) eine Pumpe (36) zur Überführung von Schmutzwasser in die Klärkammer (16) durch eine über die Trennwand (12) hinweg in die Klärkammer (16) verlaufende Leitung (38) vorgesehen ist, daß am unteren Ende der Leitung (38) in der Klärkammer eine nach unten offene Auffangschale (40) vorgesehen ist und daß der Belüfter (32) derart angeordnet ist, daß er unterhalb der Auffangschale (40) ein Wasser-Luft-Gemisch erzeugt.

2. Vorrichtung nach Anspruch 1, **dadurch gekennzeichnet, daß** eine Steuerung vorgesehen ist, die den Belüfter (32) in vorgegebenem zeitlichen Abstand nach Abschalten der Schmutzwasser-Pumpe (36) über einen vorgegebenen Zeitraum einschaltet.
